(19) **Europäisches Patentamt / European Patent Office / Office européen des brevets**

(11) **EP 1 646 950 B1**

(12) **EUROPEAN PATENT SPECIFICATION**

(45) Date of publication and mention
of the grant of the patent:
**16.01.2008 Bulletin 2008/03**

(51) Int Cl.:
***G06F 13/36*** (2006.01)

(86) International application number:
**PCT/IB2004/051114**

(21) Application number: **04744482.3**

(22) Date of filing: **05.07.2004**

(87) International publication number:
**WO 2005/003961 (13.01.2005 Gazette 2005/02)**

(54) **DATA PROCESSING SYSTEM AND METHOD FOR DATA PROCESSING**

DATENVERARBEITUNGSSYSTEM UND VERFAHREN ZUR DATENVERARBEITUNG

SYSTEME ET PROCEDE POUR LE TRAITEMENT DE DONNEES

(84) Designated Contracting States:
**AT BE BG CH CY CZ DE DK EE ES FI FR GB GR HU IE IT LI LU MC NL PL PT RO SE SI SK TR**

(30) Priority: **07.07.2003 US 485267 P**

(43) Date of publication of application:
**19.04.2006 Bulletin 2006/16**

(73) Proprietor: **Koninklijke Philips Electronics N.V.
5621 BA Eindhoven (NL)**

(72) Inventors:
• **VISSERS, Kornelis, A.
NL-5656 AA Eindhoven (NL)**

• **HENTSCHEL, Christian
NL-5656 AA Eindhoven (NL)**
• **RIEMENS, Abraham, K.
NL-5656 AA Eindhoven (NL)**

(74) Representative: **Pennings, Johannes et al
NXP Semiconductors
Intellectual Property Department
High Tech Campus 60
5656 AG Eindhoven (NL)**

(56) References cited:
**WO-A-02/25448          US-A- 5 953 685
US-A- 6 035 360          US-A1- 2003 025 698**

## Description

The invention relates to a data processing system.

The invention further relates to a method for data processing.

Prior art has recognized that real-time multimedia data processing functions will increasingly be done on programmable architectures. Such functions may be effected in hardware, in software, or in a mixture thereof. Multimedia may include audio, graphics, video, and other. Such programmable architectures may include a Central Processing Unit, Input/Output Units, optional Coprocessors such as for multimedia image processing, a Shared Bus, and a Bus Arbiter interfacing to Main Memory.

In state of the art a central bus arbiter is used to determine which data processing unit is granted access to the memory. This bus arbiter schedules the bus requests in order to achieve two distinct goals. First it assures that the memory only needs to handle a single request at a time. Secondly, it assures that bus requests from high priority clients are handled more often than requests from others, as to divide the total available bus capacity into a certain bandwidth limit for each bus client. In state of the art systems the processing units simultaneously attempt to execute at the fastest speed possible. This maximum is a design property. In many cases, this implies that the processing speed is only limited by the available data, hence the actual processing speed is determined by the arbiter.

The present inventors have recognized that in many cases, the data processing units are executing on a workload level that is significantly lower than their maximum, depending on system modes or use cases. Furthermore, the processing units often perform such workload in a repetitive fashion, such as processing images at a certain image rate. In such situations, the processing units of state of the art systems attempt to consume as much bandwidth as possible during the beginning of the repetition period, while there may be unused bandwidth left at the end of the period. In the present invention, a novel approach aims to **distribute** the bandwidth consumption more equally during the repetition period. This distribution of bandwidth consumption is achieved by delaying actual bus transfers in a controlled way. This would mean that instead of restricting the instantaneous bandwidth of the bus interface, rather the average bandwidth of the bus interface should be restricted as based on the above delay. This implies that if the requesting facility would then have less bus bandwidth available than its own quoted bandwidth, it could in principle catch-up for the discrepancy in a **subsequent** time interval. Now, according to a particularly advantageous embodiment of the present invention, such catch-up time is provided in a brief so-called **slack time interval** that is situated at the end of the time interval for which the available average bus bandwidth has been specified. Typically, a value in the range of 5% slack time interval of the averaging time interval has been found advantageous. Depending on configuration and application however, ranges of 3-8%, or even of 1-12%, and the like would be feasible.

As a result of the improvement, the requirements and constraints for a central bus arbiter can be relaxed, and the design thereof would be appreciably simplified. Furthermore, also software control or hardware control of the central bus arbiter will be simplified. These advantages are caused by the observation that one of the tasks of the central bus arbiter is simplified. Since the processors themselves limit their bandwidth use, the central arbiter does not need to enforce this limitation. When controlling a central arbiter, one should be aware of all potential users and their respective bandwidth requirements, for as based thereon defining the presently available transfer rate. Such requirements can even vary depending on actual mode settings. In the present invention, each processor's bandwidth consumption is individually controlled, only taking its own mode of operation into account Also here, simplification of the control is prominent.

In fact, the inventors have also recognized that the effecting of a relative lowering of the instantaneous transfer requirements can be realized in a straightforward manner by stall cycles. In this case however, the requesting party will always know the maximum long-time transfer rate of the communication bus facility. In particular, the US2003-0025698 A1, that shares an inventor with the present invention and is also assigned to the present assignee, describes the usage of stall cycles for lowering the actual transfer rate.

In consequence, amongst other things, it is an object of the present invention to simplify the design and control of the system, while at the same time guaranteeing real-time constraints for acceptable transfer requirements. It is another object of the present invention to provide a smart bus interface solution, which does not require redesign of the various processing stations, nor of the bus architecture.

Now therefore, according to one of its aspects, the invention is described in Claim 1. In particular, the additional features of the present invention include the enhancing of appropriate bus interfaces with a bandwidth control unit. Using these bandwidth control units, the consumption of bandwidth can be controlled, thereby effectively slowing down the average data processing speed of the media processing unit. The bus arbiter is still necessary since the various media processing units can still initiate bus transfers simultaneously. However, because the bandwidth control units of the data processing units decentrally controls the data transfer rate the task of the bus arbiter is simplified.

It is noted that US-A-5 953 685 discloses a memory controller 106 managing access requests from a number of PCI devices to a system memory. Inside the memory controller a throttling decision logic contains a "write maximum quad-word" counter that counts the number of write access requests within a "write throttling monitoring window". If the counter in the counter exceeds the value in a "write maximum quad-word register", a mask signal inhibits further write requests until the end of the time window. In the known device access control is centralized in the component where the temperature has to be kept low.

A particular media processing unit may have one, or rather, a pair of bus interfaces that operate in mutually opposite directions and that are each provided with an appropriate bandwidth control unit. If more than one bandwidth control unit would be appropriate for a single media processing unit or processor, these bandwidth control units may or may not be interconnected to each other or even be merged into a single bandwidth control unit regarding the associated media processing unit.

The invention also relates to method as claimed in Claim 6. Further advantageous aspects of the invention are recited in dependent Claims.

BRIEF DESCRIPTION OF THE DRAWING

These and further features, aspects and advantages of the invention will be discussed more in detail hereinafter with reference to the disclosure of preferred embodiments of the invention, and in particular with reference to the drawing:

Therein:

Fig. 1, shows a prior art bus-oriented system;
Fig. 2, shows an enhanced version thereof according to the present invention;
Fig. 3, shows in more detail a bandwidth controller in a first embodiment of the system shown in Fig. 2,
Fig. 4 shows in more detail an aspect of the bandwidth controller shown in Fig. 3,
Fig. 5 shows in more detail an aspect of an alternative implementation of the bandwidth controller shown in Fig. 3,
Fig. 6 shows in more detail an aspect of another alternative implementation of the bandwidth controller shown in Fig. 3,
Fig. 7 schematically shows a method according to the invention,
Fig. 8 shows a first timing diagram,
Fig. 9 shows a second timing diagram.

DETAILED DESCRIPTION OF PREFERRED EMBODIMENTS

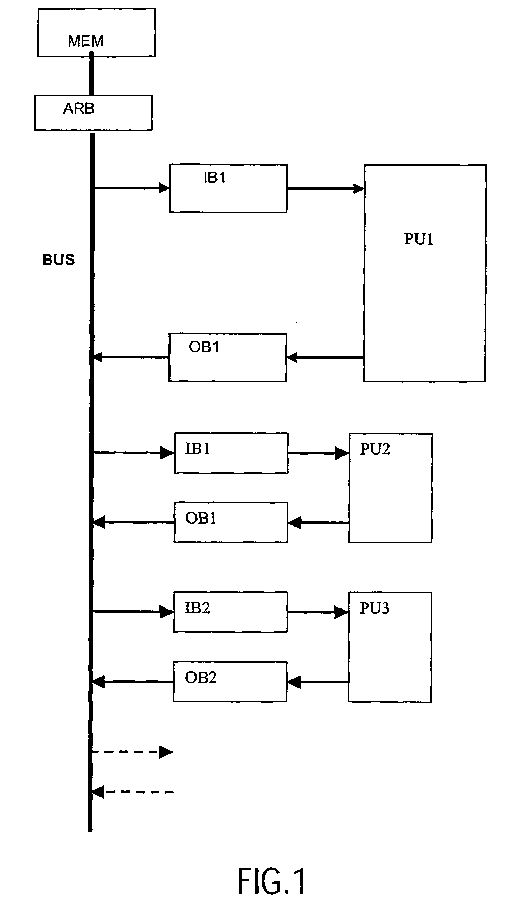

Figure 1 illustrates a typical prior art bus-oriented system. The system has bus BUS, shared memory MEM, bus arbiter ARB, media processing unit PU1, and unidirectional bus interface facilities IB1, OB1 comprising respective buffers. The bus BUS and the memory MEM are shared by a plurality of media processing units PU1, PU2, PU3 at least one of which is typically a CPU that also controls the overall system. Other categories of media processing units comprise coprocessors and physical signal source units, such as speech or image input or output units, or mass memory. Since various ones of such media processing units can initialize a bus transfer independent of the others, an arbiter is needed for two reasons: firstly is will sequentialize the bus transfers, and secondly it will assign bus bandwidth limitations to each of the processing units.

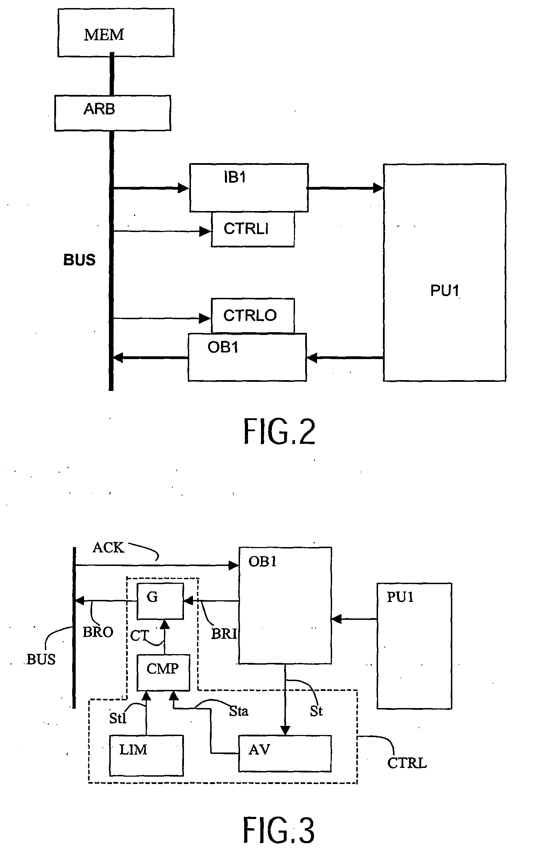

Figure 2 illustrates an enhanced version of the arrangement of Figure 1 according to an embodiment of the present invention. As shown, bus interface facilities IB1, OB 1 are each enhanced by a respective bus bandwidth control unit CTRLI, CTRLO. Using these, bus bandwidth consumption can be controlled, whilst effectively slowing down in this case the data processing speed of the media processing unit PU 1. The two control units CTRLI, CTRLO may or may not be interconnected and/or merged into a single control unit. A single media processing unit can have in fact one or more bus interfaces. The buffering proper can be according to a FIFO procedure. The central arbiter is still necessary to sequentialize the bus transfers, but the requirements for bandwidth limitation can be relaxed, since the bus bandwidth control units limit the bandwidth usage.

Figure 3 shows a processing unit PU1 coupled via a bus interface facility OB1 to a bus BUS and in more detail an embodiment of a bandwidth control unit CTRL. The bandwidth control unit comprises an average calculation unit AV to calculate an average amount of data Sta transferred via the bus interface facility OB to the bus. To that end the average calculation unit receives a signal St indicative for the amount of data transfer taking place via the bus interface facility OB1. Although in this example control of an output buffer is shown, it is equally applicable to an input buffer or to a combined I/O-buffer. The bandwidth control unit CTRL further comprises a register LIM for storing an indication for the allowed average data rate Stl. A comparator CMP compares these signals and controls a gate G with control signal CT. Normally the gate G transmits a bus request BRI from the bus interface OB 1 as the signal BRO to the arbiter, and the arbiter will respond with an acknowledge signal ACK if the bus is available. However, if the average amount of data Sta transferred via the bus interface facility OB1 to the bus exceeds the allowed average data rate Stl, the control signal CT causes the gate G to block the bus request signal BRI. In that case no request BRO is received by the arbiter, and further data transmission is prevented until the average value Sta has decreased to a value below the allowed value Stl.

On the other hand, if it occurs that the bus BUS has not been available for some time, because another device, for example a CPU having a high priority has occupied the bus, the average amount of data Sta transferred is substantially lower than the allowed value Stl. In that case the processing facility PU1 has the occasion to temporarily increase data transfer until the average value Sta again reaches the allowed value Stl.

There exist various reasons for effecting bandwidth control. In the first place, the bandwidth control unit CTRL can adapt the consumption of bandwidth by a media processing unit to a level that is suitable for the function actually performed. This means that the bandwidth is function dependent rather than station dependent. Now, the reference Patent Application, supra, discloses the usage of stall cycles through providing a programmable hardware circuit. The present invention provides an alternative way to stall the processor and therefore reduce its bandwidth consumption. The present invention is also more generic, inasmuch as it needs be implemented only once in bus interface units, and may be applied to many different media processing units. The control software necessary for the present invention is more easy to design, because the property "transfer bandwidth" is controlled immediately, whereas no particular knowledge of the media processing unit in question is required for calculating the slowdown numbers. The latter numbers only indirectly relate to the bandwidth consumption.

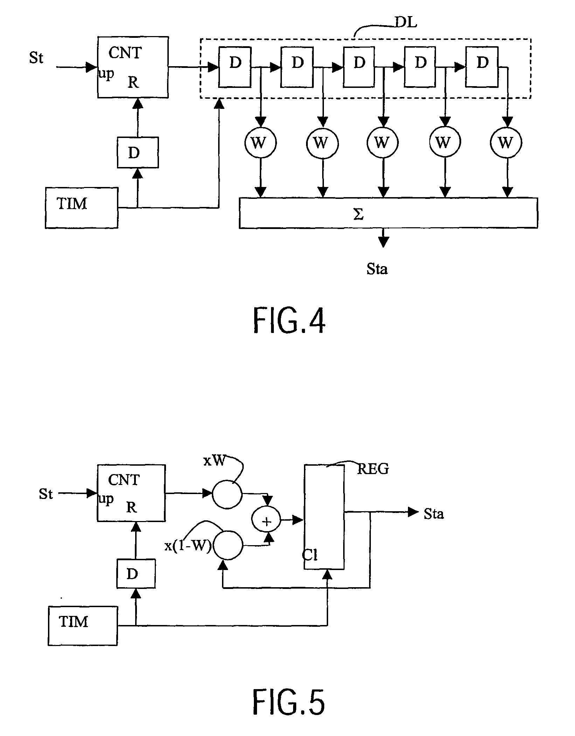

Several embodiments are possible for calculating an average data transfer rate, two of which are shown in Figure 4 and Figure 5 respectively.

In Figure 4 the average calculation unit AV comprises a counter CNT, a timer TIM a delay line DL and a weighting W and summing unit Σ. The counter CNT counts each data transfer signaled by the bus interface OB 1. The timer TIM clocks the counted value into the delay line DL and resets the counter periodically. The weighting W and summing unit Σ calculates a moving average Sta.

Figure 5 shows a more simple implementation of the average calculation unit AV. Now the output of the counter is weighted by a weight factor W. An average value Sta stored in register REG is also weighted, by a factor (1-W). These weighted values are summed and periodically clocked into the register REG by timer TIM. The weightfactor W is a value between 0 and 1, depending on the length of the integration period desired.

In the implementations shown in Figures 4 and 5 the bandwidth control unit calculates a moving average Sta of the data transfer and blocks a further data transfer when the moving average exceeds the allowed average data rate Stl.

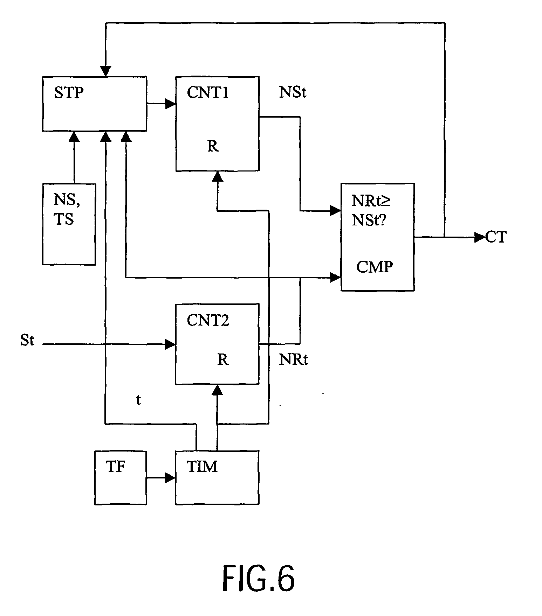

In another embodiment, shown in Figure 6, the bandwidth control unit periodically starts an integration of the data transfer, and blocks data transfer if the integrated value exceeds a threshold value calculated from the allowed average data rate. To that end the embodiment shown in Figure 6 comprises a first counter CNT1 for calculating the allowed amount of data NSt, and a second counter CNT2 for calculating the actually transferred amount of data NRt in a particular time interval and a comparator CMP for comparing those values and providing an control signal CT for temporarily blocking a data transfer if the actually transferred amount of data NRt exceeds the allowed value. The first counter has a stepsize controller STP which determines the step size dependent on the length of the time period TS within which an amount of data NS is allowed to be transferred and the amount of data actually transferred NRt in the lapsed time t. Both timers are reset after each timeframe TF.

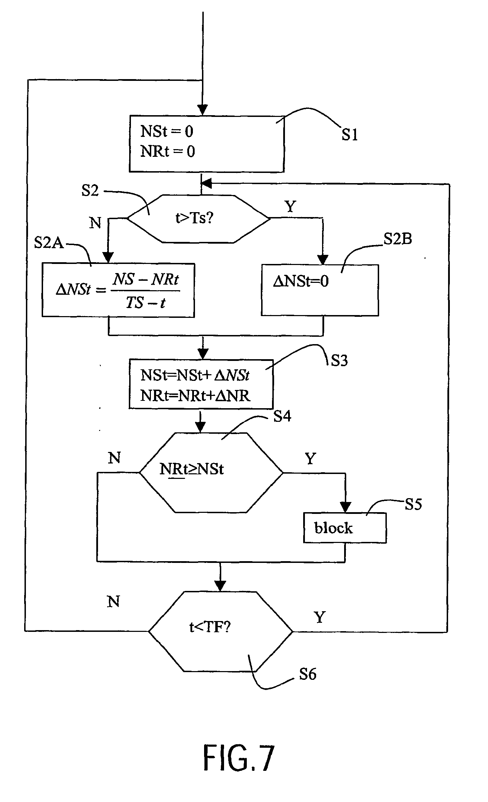

The operation of the bandwidth control unit shown in Figure 6 is described in more detail with reference to Figure 7.

In step S1 both counters CNT1, CNT2 are initialized to 0.

In step S2, S2A , S2B the stepsize controller calculates the stepsize ΔNSt depending on the value of t: If t ≤ TS the value for the stepsize is calculated as:

$$\Delta NSt = \frac{NS - NRt}{TS - t}$$

Otherwise, if t>TS the stepsize is set to 0: ΔNSt=0.

In step S3 the counters CNT1, CNT2 are incremented.

The first counter CNT1 is incremented with the stepsize ΔNSt,

The second counter CNT2 is incremented with ΔNR indicative for the number of bytes transferred after the previous increment.

In step S4 it is compared whether the counted number of bytes actually transferred NR exceeds the number of bytes allowed NS.

If this is the case a blocking signal CT is generated in step S5 to prevent further data transfer via the bus interface controlled by the bandwidth control unit.

Then it is checked in step S6 whether the lapsed time t is less than the duration TF of the timeframe. The duration of the timeframe TF may be equal to the time period TS for which the transferred amount of data NS is scheduled, but alternatively there may be a slack time Tsl= TF-TS. In this way the possibility is taken into account that the required amount of data NS could not be transferred by the end of the time period TS, and the slack time Tsl allows to achieve that amount before the time frame TF is finished.

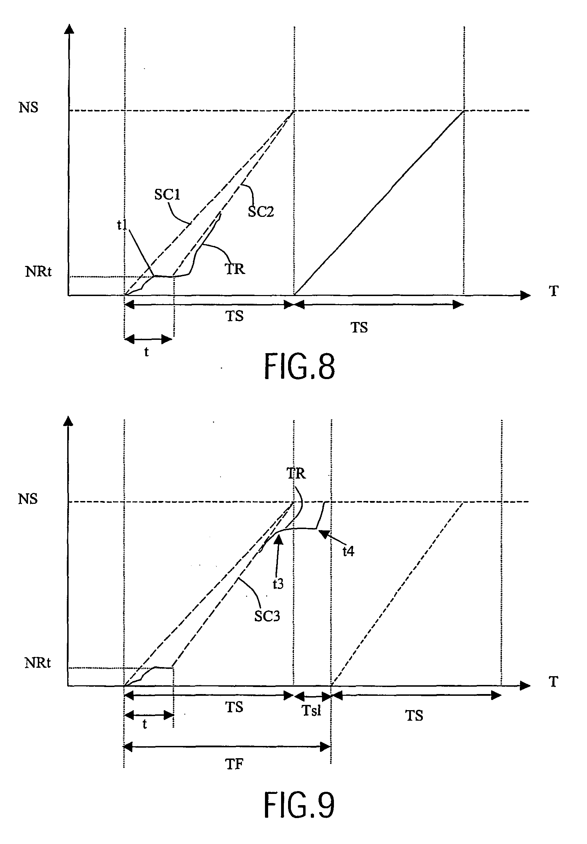

Although both embodiments of the invention, decentrally control the average busload of a device, the embodiment of Figure 6 has an additional advantage of a more balanced distribution of the busload. This is illustrated in Figure 8. A shown therein, the bandwidth control unit has scheduled SC1, that the amount of data NS is transferred as a regular stream of data in the time period TS. However, at t1 a substantial delay occurs, for example caused by a high priority device as the CPU, or a DMA. This causes the actually transferred amount to be substantially less than what is scheduled. At time t the bandwidth control unit calculates a new schedule SC2 which allows the processing unit to catch up the backlog caused in the interval t1-t in the remaining time TS-t. In this way it is prevented that all the processing units attached to the bus try to catch up their back lock at the same time immediately after a heavy busload has occurred. Instead the bandwidth control units achieve that the data transfers needed for catching up are distributed in time.

Different bandwidth control units may have different settings of the parameters TS, TF, NS as well as different settings for the frequency with which a new schedule is calculated.

Figure 9 shows an example where the time frame TF includes a slack time Tsl. At time t3 a backlog occurs in the actual transferred amount of data TR as compared to the scheduled amount SC3. Although there is no occasion to catch up this backlog during the scheduled time period TS, the bandwidth control unit provides for an opportunity to catch up during the slack time Tsl. In the example shown this occurs after time t4.

When this invention is applied to a CPU, certain special considerations apply. Such CPU will typically run many tasks in a time multiplex organization. Certain tasks will require a relatively greater bandwidth than others. This will typically cause periodically varying bandwidth consumption requirement patterns, with peaks at the instants when tasks with the higher requirements are run. State-of-the-art systems will assign the CPU proper the highest priority and will cause minimum latency to the memory, to avoid expensive stall cycles. This prior art approach will render the system behavior hard to predict, since the bandwidth is entirely determined by the program actually running on the CPU.

Now, when the present invention is used without special measures, the CPU will only be slowed down which causes additional stall cycles during programs that require peak bandwidth consumption. In many instances, this is not necessary. Therefore, the bandwidth control units can be added to the CPU used and be used as follows:

    a. generally, allow bandwidth ***peaks*** even if exceeding average bandwidth consumption, provided that the physical bus capacity will not be exceeded;
    b. only in case average bandwidth consumption tends to exceed the setpoint value, actively change to restrict the bandwidth used by the CPU.

When now considering a system comprising a CPU and one or more other media processing units, this would allow the CPU to temporarily consume an excessive amount of bandwidth. Later on in the period, the CPU will then use considerably less bandwidth, and all other units will be able to catch up. As long as the total average bandwidth remains within the available bus transfer capacity, the overall system will adapt itself to the dynamic bus loads of the individual units without central control. Thus the system will combine high bus utilization with guaranteeing real-time operation, whilst avoiding a single point of control.

Means forming part of the invention may both be implemented in the form of dedicated hardware or in the form of a programmed general purpose processor.

**Claims**

**1.** A data processing system comprising a plurality of data processing facilities (PU1, PU2, PU3) coupled by means of a data communication facility (BUS) to a shared memory facility,
**characterized in that** the data processing facilities (PU1) each have a bandwidth control unit (CTRLI, CTRLO) for controlling a rate (NRt) of its data transfer along the data communication facility (BUS), the bandwidth control unit restricting the data transfer if the data transfer rate exceeds an allowed average data rate (NSt).

**2.** A data processing system according to claim 1, wherein the bandwidth control unit (CTRLI, CTRLO) calculates a moving average of the data transfer rate and blocks a further data transfer when the moving average exceeds the allowed average data rate.

**3.** A data processing system according to claim 1, wherein the bandwidth control unit (CTRLI, CTRLO) periodically starts an integration of the data transfer amount, and blocks data transfer if the integrated value (NRt) exceeds a threshold value (NSt) calculated from the allowed average data rate (NS).

**4.** A data processing system according to claim 3, wherein time frames (TF) wherein the bandwidth control unit (CTRLI, CTRLO) periodically starts an integration include a slack time (Tsl) after a scheduled time period (TS) for transferring the allowed amount of data (NS), the slack time (Tsl) allowing a processing facility to catch up a backlog occurred during the scheduled time period (TS).

**5.** A data processing system according to claim 3, wherein the bandwidth control unit (CTRLI, CTRLO) adapts the allowed average data rate (SC1, SC2) during the integration period to adjust for temporary lack of bandwidth.

**6.** A data processing system, according to claim 1, wherein the data processing facility has separate bandwidth control units (CTRLI, CTRLO) for controlling the rate of the ingoing and outgoing data transfer.

**7.** A method for transmitting data in a data processing system comprising a plurality of data processing facilities (PU1, ..) that are coupled by means of a data communication facility (BUS) to a shared memory facility (MEM) by decentrally controlling the data transfer rate, **characterized by** for each data processing facility (PU1, ..) calculating an average amount of data transferred (NRt), comparing the amount with an allowed average data rate (NSt) and blocking data transfer if the calculated average amount of data (NRt) exceeds the allowed average data rate (NSt).

## Patentansprüche

1. Datenverarbeitungssystem, das mehrere Datenverarbeitungseinrichtungen (PU1, PU2, PU3) umfasst, die mittels einer Datenkommunikationseinrichtung (BUS) mit einer Einrichtung gemeinsam genutzten Speichers gekoppelt sind, **dadurch gekennzeichnet, dass** die Datenverarbeitungseinrichtungen (PU 1) jeweils eine Bandbreitensteuerungseinheit (CTRLI, CTRLO) zum Steuern einer Rate (NRt) ihrer Datenübertragung entlang der Datenkommunikationseinrichtung (BUS) aufweisen, wobei die Bandbreitensteuerungseinheit die Datenübertragung beschränkt, wenn die Datenübertragungsrate eine zulässige mittlere Datenrate (NSt) überschreitet.

2. Datenverarbeitungssystem nach Anspruch 1, wobei die Bandbreitensteuerungseinheit (CTRLI, CTRLO) einen gleitenden Mittelwert der Datenübertragungsrate berechnet und eine weitere Datenübertragung blockiert, wenn der gleitende Mittelwert die zulässige mittlere Datenrate überschreitet.

3. Datenverarbeitungssystem nach Anspruch 1, wobei die Bandbreitensteuerungseinheit (CTRLI, CTRLO) periodisch eine Integration der Datenübertragungsmenge startet und Datenübertragung blockiert, wenn der integrierte Wert (NRt) einen Schwellwert (NSt) überschreitet, der aus der zulässigen mittlere Datenrate (NS) berechnet wird.

4. Datenverarbeitungssystem nach Anspruch 3, wobei Zeitrahmen (TF), in denen die Bandbreitensteuerungseinheit (CTRLI, CTRLO) periodisch eine Integration startet, eine Schlupfzeit (Tsl) nach einer geplanten Zeitdauer (TS) zum Übertragen der zulässigen Datenmenge (NS) beinhalten, wobei es die Schlupfzeit (Tsl) einer Verarbeitungseinrichtung ermöglicht, einen Rückstand aufzuholen, der währen der geplanten Zeitdauer (TS) aufgetreten ist.

5. Datenverarbeitungssystem nach Anspruch 3, wobei die Bandbreitensteuerungseinheit (CTRLI, CTRLO) die zulässige mittlere Datenrate (SC1, SC2) während des Integrationszeitraums anpasst, um vorübergehenden Bandbreitenmangel auszugleichen.

6. Datenverarbeitungssystem nach Anspruch 1, wobei die Datenverarbeitungseinrichtung getrennte Bandbreitensteuerungseinheiten (CTRLI, CTRLO) zum Steuern der Rate der ankommenden und der abgehenden Datenübertragung aufweist.

7. Verfahren zum Übertragen von Daten in einem Datenverarbeitungssystem, das mehrere Datenverarbeitungseinrichtungen (PU1,..) umfasst, die mittels einer Datenkommunikationseinrichtung (BUS) mit einer Einrichtung gemeinsam genutzten Speichers (MEM) gekoppelt sind, durch dezentrales Steuern der Datenübertragungsrate, **gekennzeichnet durch** Berechnen einer mittleren übertragenen Datenmenge (NRt) für jede Datenverarbeitungseinrichtung (PU1,..), Vergleichen der Menge mit einer zulässigen mittleren Datenrate (NSt) und Blockieren von Datenübertragung, wenn die berechnete mittlere Datenmenge (NRt) die zulässige mittlere Datenrate (NSt) überschreitet.

## Revendications

1. Système de traitement de données comprenant une pluralité de moyens de traitement de données (PU1, PU2, PU3) couplés à l'aide d'un moyen de communication de données (BUS) à un moyen de mémoire partagée,
   **caractérisé en ce que** les moyens de traitement de données (PU1) possèdent chacun une unité de commande de bande passante (CTRLI, CTRLO) pour commander un débit (NRt) de son transfert de données le long du moyen de communication de données (BUS), l'unité de commande de bande passante limitant le transfert de données si le débit de transfert de données dépasse un débit de données moyen autorisé (NSt).

2. Système de traitement de données selon la revendication 1, dans lequel l'unité de commande de bande passante (CTRLI, CTRLO) calcule une moyenne mobile du débit de transfert de données et bloque un autre transfert de données lorsque la moyenne mobile dépasse le débit de données moyen autorisé.

3. Système de traitement de données selon la revendication 1, dans lequel l'unité de commande de bande passante (CTRLI, CTRLO) démarre périodiquement une intégration de la quantité de transfert de données, et bloque un transfert de données si la valeur intégrée (NRt) dépasse une valeur de seuil (NSt) calculée à partir du débit de données moyen autorisé (NS).

4. Système de traitement de données selon la revendication 3, dans lequel des trames de temps (TF) dans lesquelles l'unité de commande de bande passante (CTRLI, CTRLO) démarre périodiquement une intégration comprennent un temps d'écart (Tsl) après une période de temps programmée (TS) pour transférer la quantité autorisée de données (NS), le temps d'écart (Tsl) permettant à un moyen de traitement de compenser un retard survenu pendant la période de temps programmée (TS).

5. Système de traitement de données selon la revendication 3, dans lequel l'unité de commande de bande passante (CTRLI, CTRLO) adapte le débit de données moyen autorisé (SC1, SC2) pendant la période d'intégration afin d'ajuster un manque temporaire de bande passante.

6. Système de traitement de données, selon la revendication 1, dans lequel le moyen de traitement de données possède des unités de commande de bande passante séparées (CTRLI, CTRLO) pour commander le débit du transfert de données entrant et sortant.

7. Procédé pour transmettre des données dans un système de traitement de données comprenant une pluralité de moyens de traitement de données (PU1, ...) qui sont couplés à l'aide d'un moyen de communication de données (BUS) à un moyen de mémoire partagée (MEM) en commandant de manière décentrée le débit de transfert de données, **caractérisé par**, pour chaque moyen de traitement de données (PU1, ..), le calcul d'une quantité moyenne de données transférées (NRt), la comparaison de la quantité avec un débit de données moyen autorisé (NSt) et le blocage du transfert de données si la quantité moyenne calculée de données (NRt) dépasse le débit de données moyen autorisé (NSt).

FIG.1

FIG.2

FIG.3

FIG.4

FIG.5

FIG.6

NSt = 0
NRt = 0 — S1

S2 — t>Ts?

N — Y

S2A — $\Delta NSt = \dfrac{NS - NRt}{TS - t}$

S2B — $\Delta NSt = 0$

NSt=NSt+$\Delta NSt$
NRt=NRt+$\Delta NR$ — S3

S4 — NRt≥NSt

N — Y

block — S5

t<TF? — S6

N — Y

FIG.7

FIG.8

FIG.9

**EP 1 646 950 B1**

## REFERENCES CITED IN THE DESCRIPTION

**Patent documents cited in the description**

- US 20030025698 A1
- US 5953685 A